# EUROPÄISCHE PATENTSCHRIFT

(11) **EP 1 931 720 B1**
(45) Veröffentlichungstag und Bekanntmachung des Hinweises auf die Patenterteilung: **18.03.2009**
(21) Anmeldenummer: 06793919.9
(22) Anmeldetag: 29.09.2006
(51) Int. Cl.: C08G 77/16

(54) **VERFAHREN ZUR HERSTELLUNG VON OH-ENDSTÄNDIGEN ORGANOHYDROGENPOLYSILOXANEN**
METHOD FOR PRODUCING OH-TERMINAL ORGANIC HYDROGEN POLYSILOXANES
PROCEDE POUR PREPARER DES POLYSILOXANES D'HYDROGENE ORGANIQUES A TERMINAISON OH

(30) Priorität: 06.10.2005 DE 102005048035
(43) Veröffentlichungstag der Anmeldung: 18.06.2008
(73) Patentinhaber: Wacker Chemie AG, 81737 München (DE)
(72) Erfinder: GEISBERGER, Gilbert, 84503 Altötting (DE); LINDNER, Tassilo, 84561 Mehring-öd (DE); HERZIG, Christian, 83329 Waging (DE)
(74) Vertreter: Fritz, Helmut
(86) Internationale Anmeldenummer: PCT/EP2006/066901
(87) Internationale Veröffentlichungsnummer: WO 2007/039565

(56) Entgegenhaltungen:
- DE-A1- 10 311 724
- US-A- 5 169 970

## Beschreibung

Die Erfindung betrifft ein Verfahren zur Herstellung von OH-endständigen Diorganosiloxy-Einheiten und Si-H Gruppen aufweisenden Organopolysiloxanen.

EP 967236 A beschreibt die Herstellung von Hydrogenmethylpolysiloxanen mit Trimethylsilyl-Endgruppen in einem zweistufigen Verfahren aus Methyldichlorsilan, Trimethylchlorsilan und Wasser.

JP 07330904 A beschreibt ein Verfahren zur Herstellung von OH-endständigen Organohydrogenpolysiloxanen durch Ring öffnende Copolymerisation von cyclischem Hydrogensiloxan und cyclischem Siloxan.

In DE 3126343 A ist die Herstellung von OH-endständigen Organohydrogenpolysiloxanen durch gemeinsame Hydrolyse von Methyldichlorsilan, Dimethyldichlorsilan und Wasser beschrieben. Bei der Herstellung und Lagerung der Produkte erfolgt Wasserstoffabspaltung, wodurch Verzweigungen entstehen und zu Vergelungen der Produkte führen. Die unkontrollierte Kondensation der terminalen Si-OH Gruppen führt zu hochviskosen Produkten.

Der Erfindung liegt die Aufgabe zugrunde, ein vereinfachtes Verfahren zur Herstellung von linearen OH-endständigen Diorganosiloxy-Einheiten und Si-H Gruppen aufweisenden Organopolysiloxanen bereitzustellen.

Gegenstand der Erfindung ist ein Verfahren zur Herstellung von OH-endständigen Organohydrogenpolysiloxanen (P), bei dem in einem ersten Schritt Organohydrogendichlorsilane (A) und Diorganodichlorsilane (B) mit höchstens 0,5 Mol Wasser je Mol hydrolysierbaren Chlors zu einem Teilhydrolysat (T) und gasförmigem Chlorwasserstoff umgesetzt werden und in einem zweiten Schritt das Teilhydrolysat (T) zur Entfernung der noch vorhandenen SiCl-Gruppen mit Wasser unter Bildung von Salzsäure behandelt wird, wobei ein die Organohydrogenpolysiloxane (P) enthaltendes Hydrolysat (H) anfällt.

Bei dem Verfahren werden direkt aus den Organochlorsilanen die linearen Organohydrogenpolysiloxane (P) hergestellt. Die bisher notwendige zusätzliche Verfahrensstufe, die Ringöffnungsreaktion von mindestens zwei unterschiedlichen Organocyclosiloxanen entfällt.

Das Verfahren ist leicht zu steuern, die Bildung von Verzweigungen in den Organohydrogenpolysiloxanen (P) tritt nicht auf, da die Wasserstoffabspaltung unterdrückt wird. Die Organohydrogenpolysiloxane (P) neigen bei der Herstellung auch nicht zu Vergelungen. Ferner wird ein hoher Anteil des Chlors der Ausgangsstoffe als HCl-Gas gewonnen.
Die nach dem erfindungsgemäßen Verfahren hergestellten Organohydrogenpolysiloxane (P) zeichnen sich durch ausgezeichnete Lagerstabilität aus.

Das hydrolysierbare Chlor liegt in Form von SiCl-Gruppen vor. Vorzugsweise werden im ersten Schritt mindestens 0,3 mol Wasser je Mol hydrolysierbaren Chlors eingesetzt.

In den Organohydrogenpolysiloxanen (P) können die Organohydrogensiloxyeinheiten und Diorganosiloxyeinheiten beliebig verteilt sein. Eine statistische Verteilung oder eine Verteilung in Blöcken ist möglich.

Die OH-endständigen Organohydrogenpolysiloxane (P) weisen vorzugsweise die allgemeine Formel 1

HO(SiR₂O)ₘ(SiR¹₂O)ₙH (1),

auf, in der
- **R¹**: Wasserstoff oder einen gegebenenfalls mit Halogen- oder Cyanoresten substituierten Kohlenwasserstoffrest mit 1 bis 18 Kohlenstoffatomen,
- **R**: einen gegebenenfalls mit Halogen- oder Cyanoresten substituierten Kohlenwasserstoffrest mit 1 bis 18 Kohlenstoffatomen,
- **m**: ganzzahlige Werte von 1 bis 1000 und
- **n**: ganzzahlige Werte von 1 bis 1000 bedeuten,
mit der Massgabe, dass mindestens ein Rest **R¹** Wasserstoff bedeutet.

Die im ersten Schritt eingesetzten Organohydrogendichlorsilane (A) weisen vorzugsweise die allgemeine Formel 2

R¹₂SiCl₂ (2),

auf, in der **R¹** die vorstehenden Bedeutungen aufweist.

Die im ersten Schritt eingesetzten Diorganodichlorsilane (B) weisen vorzugsweise die allgemeine Formel 3

R₂SiCl₂ (3),

auf, in der **R** die vorstehenden Bedeutungen aufweist.

Vorzugsweise bedeuten die Kohlenwasserstoffe **R** und **R¹** einen von ethylenisch oder acetylenisch ungesättigten Bindungen freien Kohlenwasserstoffrest mit 1 bis 18 Kohlenstoffatomen.

Beispiele für Kohlenwasserstoffreste **R** und **R¹** sind Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Cycloalkylreste, wie Cyclopentyl-, Cyclohexyl-, Cycloheptylreste und Methylcyclohexylreste; Arylreste, wie der Phenyl-Naphthyl- und Anthryl- und Phenanthrylrest; Alkarylreste, wie o-, m-, p-Tolylreste, Xylylreste und Ethylphenylreste; Aralkylreste, wie der Benzylrest, der alpha- und der β-Phenylethylrest.

Beispiele für substituierte Kohlenwasserstoffreste Reste **R** und **R¹** sind Cyanalkylreste, wie der β-Cyanethylrest, und halogenierte Kohlenwasserstoffreste, beispielsweise Halogenalkylreste, wie der 3,3,3-Trifluor-n-propylrest, der 2,2,2,2',2',2'-Hexafluorisopropylrest, der Heptafluorisopropylrest, und Halogenarylreste, wie der o-, m-, und p-Chlorphenylrest.

Bevorzugt handelt es sich bei den Resten **R** und **R¹** um einen Phenylrest oder linearen Alkylrest, insbesondere mit 1 bis 10, besonders 1 bis 6 Kohlenstoffatomen. Besonders bevorzugte Kohlenwasserstoffreste **R** und **R¹** sind n-Propyl-, Ethyl- und insbesondere Methylrest.

Vorzugsweise bedeutet **m** Werte von höchstens 200, insbesondere höchstens 50. Vorzugsweise bedeutet **n** Werte von höchstens 500, insbesondere höchstens 250.

Vorzugsweise beträgt der Gehalt der als Si-H vorliegenden Wasserstoffatome im Organohydrogenpolysiloxan (P) 0,001 bis 1,3 Gew.-%, insbesondere 0,05 bis 1,1 Gew.-%.

Bevorzugte im ersten Schritt eingesetzte Gemische sind (Methyl=Me):
Me₂SiCl₂/MeSiHCl₂
PropylMeSiCl₂/MeSiHCl₂
Me₂SiCl₂/PhenylMeSiCl₂/MeSiHCl₂
CyclopentylSiHCl₂/Me₂SiCl₂
IsooctylSiHCl₂/Me₂SiCl₂

Das erfindungsgemässe Verfahren ist hervorragend geeignet zur Herstellung von schwerflüchtigen Organohydrogenpolysiloxanen (P), z. B. OH-terminierten Hydrogenpolysiloxanen mit Dimethylsilyl-Gruppen. Vorzugsweise weisen die Organohydrogenpolysiloxane (P) eine Viskosität von 1 bis 1200 mPas bei 25 °C auf.

Der erste Schritt, der zweite Schritt oder beide Schritte des erfindungsgemässen Verfahrens werden bevorzugt in Anwesenheit eines in Wasser unlöslichen organischen Lösungsmittels mit einer Dichte von höchstens 0,9 kg/l (L) durchgeführt. Unter einem in Wasser unlöslichen organischen Lösungsmittel (L) sollen im Rahmen dieser Erfindung Lösungsmittel verstanden werden, bei denen die Löslichkeit bei 25°C unter 1 g Lösungsmittel/100 g Wasser liegt, wie z. B. Toluol, Xylol, Tetrachlorkohlenstoff, n-Oktan. Bevorzugt ist Toluol.

Das im ersten Schritt gebildete Teilhydrolysat (T) besteht aus teilweise Cl- und gegebenenfalls OH-endständigen Organohydrogenpolysiloxanen und cyclischen Siloxanen. Der Gehalt an noch vorhandenen SiCl-Gruppen im Teilhydrolysat (T) beträgt vorzugsweise 0,5 bis 5 Gew.-%, insbesondere 1,0 bis 2 Gew.-%.

Der erste Schritt des erfindungsgemässen Verfahrens wird vorzugsweise bei einer Temperatur von 0 bis 80°C, insbesondere 20 bis 60°C, und einem Druck von von 900 bis 1600 hPa durchgeführt.

Das im ersten Schritt anfallende Chlorwasserstoffgas kann direkt in anderen Verfahren eingesetzt werden, beispielsweise mit Methanol zur Herstellung von Chlormethan, welches wiederum bei der Methylchlorsilansynthese verwendet wird. So kann das Chlor im Kreis geführt werden, ohne an die Umwelt abgegeben zu werden.

Im zweiten Schritt wird der Chlorgehalt des Teilhydrolysats (T) mit Wasser vollständig zur Reaktion gebracht. Die dabei entstehende Salzsäure hat vorzugsweise einen HCl-Gehalt von 3 bis 20 Gew.-%, insbesondere 5 bis 10 Gew.-%.

In einer besonderen Ausführungsform des erfindungsgemässen Verfahrens wird im zweiten Schritt gebildete Salzsäure im ersten Schritt als Wasserlieferant eingesetzt. Vorzugsweise werden mindestens 90 %, insbesondere mindestens 95 % der im zweiten Schritt gebildeten Salzsäure im ersten Schritt eingesetzt.

In einer besonders bevorzugten Ausführungsform des erfindungsgemässen Verfahrens wird im zweiten Schritt höchstens so viel Wasser eingesetzt, dass das Wasser der entstehenden Salzsäure im ersten Schritt vollständig umgesetzt wird.

Die SiR₂O/SiR¹₂O-Verhältnisse der erfindungsgemäss hergestellten Organohydrogenpolysiloxane (P) werden über das Gewichtsverhältnis der eingesetzten Chlorsilan-Gemische gesteuert.

Der zweite Schritt des erfindungsgemässen Verfahrens wird vorzugsweise bei einer Temperatur von 0 bis 100°C, insbesondere 10 bis 60°C, und dem Druck der umgebenden Atmosphäre, also bei 900 bis 1100 hPa, durchgeführt.

In einer bevorzugten Ausführungsform wird das nach dem zweiten Schritt anfallende Hydrolysat (H) in Organohydrogenpolysiloxane (P) und leichtflüchtiges Organohydrogenpolysiloxane enthaltendes Gemisch (G) aufgetrennt. Das Gemisch (G) wird vorzugsweise in den ersten Schritt und/oder zweiten Schritt zurückgeführt oder ganz oder teilweise zu schwerer flüchtigen, im Wesentlichen linearen Organohydrogenpolysiloxane umgelagert.

Die Abtrennung des Gemisches (G) erfolgt bevorzugt durch Destillation, wobei diese besonders bevorzugt in zwei Stufen in Gemische (G1) und (G2) durchgeführt wird. Bei den Gemischen (G), (G1), (G2) handelt es sich überwiegend um kurzkettige lineare und cyclische Organohydrogensiloxane und gegebenenfalls um das Lösungsmittel (L). In einer ersten Destillationsstufe wird vorrangig das gegebenenfalls eingesetzte Lösungsmittel (L) abgetrennt. Dieses kann im ersten oder zweiten Verfahrensschritt wieder zugeführt werden. Die zweite Destillationsstufe dient vorrangig der Abtrennung eines Organohydrogensiloxan-Gemisches (G2).

Das Abtrennen der Destillate kann zur Gewinnung von cyclischen Organohydrogenpolysiloxanen dienen.

Die erste Destillationsstufe wird vorzugsweise bei einer Temperatur von 50 bis 150°C, insbesondere 60 bis 120°C, und einem Absolutdruck von 50 bis 1100 hPa durchgeführt.

Die zweite Destillationsstufe wird vorzugsweise bei einer Temperatur von 80 bis 200°C, insbesondere 120 bis 160°C, und einem Absolutdruck von 1 und 30 hPa, durchgeführt.

Vorzugsweise werden die Gemische (G), (G1), (G2) in den ersten Schritt zurückgeführt.

Besonders bevorzugt wird mit den Gemischen (G), (G1), (G2), gegebenenfalls nach Abtrennung des Lösungsmittels (L) eine Umlagerung in Anwesenheit eines Umlagerungskatalysators durchgeführt, um den Anteil an schwerer flüchtigen, im Wesentlichen linearen Organohydrogenpolysiloxane zu erhöhen. Bevorzugt handelt es sich bei diesen Katalysatoren um stark saure Ionenaustauscher, besonders bevorzugt auf Basis Polystyrol und mit Sulfonsäuregruppen funktionalisiert. Bevorzugt wird der Katalysator in einen Rohrreaktor und insbesondere als lose Schüttung gefüllt, er kann aber auch als gepackte Füllung vorliegen.

Während der Kontaktzeit werden zum überwiegenden Teil, bevorzugt zu 80 bis 95 % Gew.-% des flüchtigen Organohydrogenpolysiloxans, zu schwer flüchtigem, im Wesentlichen linearen Organohydrogenpolysiloxan umgelagert. Die Gemische (G), (G1), (G2) enthalten bevorzugt bis zu 60 Gew.-% Lösungsmittel (L).

Die Gemische (G), (G1), (G2) können in einem Reaktionsgefäss mit Katalysator kontaktiert werden. Als Reaktionsgefäss können beliebige Reaktionsgefässe, wie Rührkessel und insbesondere Rohrreaktor eingesetzt werden. Die Gemische (G), (G1), (G2) können entweder von oben über die Katalysatorschüttung gegeben oder sie durchströmen mittels Pumpe von unten nach oben die Katalysatorsäule, wobei die Anströmung von unten mittels Pumpe bevorzugt ist.

Entscheidend für den Grad der Umlagerung sind Katalysatormenge, Verweilzeit und Temperatur. Kontaktzeiten von einer Minute bis hundertzwanzig Minuten sind bevorzugt und zwei bis 30 Minuten sind besonders bevorzugt. Die Umlagerung wird bei Temperaturen von bevorzugt -30°C bis +200°C, besonders bevorzugt von 0 bis 30°C, und einem bevorzugten Druck der umgebenden Atmosphäre, also etwa 900 bis 1100 hPa, durchgeführt.

Insbesondere wird das Gemisch (G1) direkt in den ersten Hydrolyseschritt zurückgeführt und das Gemisch (G2) in Anwesenheit von Umlagerungskatalysator umgelagert und anschließend vor die erste Destillationsstufe zurückgeführt.

Das erfindungsgemässe Verfahren kann absatzweise, halbkontinuierlich oder vollkontinuierlich durchgeführt werden, wobei bevorzugt die vollkontinuierliche Fahrweise der zwei Schritte und gegebenenfalls der Abtrennung, Bearbeitung und Zuführung der Gemische (G), (G1), (G2) in einem Anlagenverbund zum Einsatz kommt.

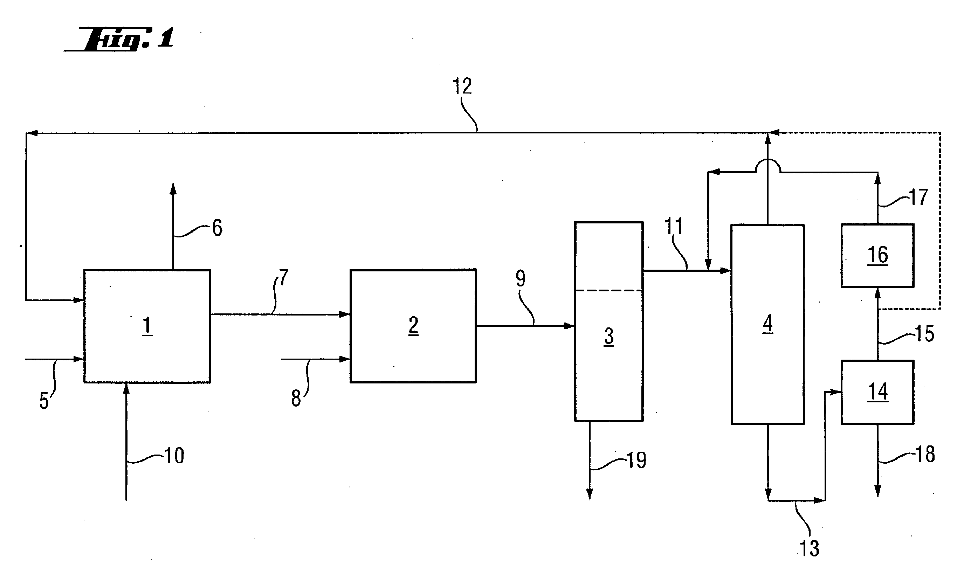

Fig. 1 zeigt eine bevorzugte Ausführungsform des erfindungsgemäßen Verfahrens:
Im ersten Schritt werden in den Loop-Reaktor (1) über Leitung (5) das Chlorsilan-Gemisch, über Leitung (10) Wasser und über Leitung (12) das Destillat (G1) der Destillationseinheit (4), die vorzugsweise ein Umlaufverdampfer ist, eingespeist. Abgeführt wird gasförmiger Chlorwasserstoff über Leitung (6) und das hergestellte Teilhydrolysat (T) über Leitung (7).

Das Teilhydrolysat (T) wird über Leitung (7) und Wasser über Leitung (8) in den Loop-Reaktor (2) dosiert.

Das gesamte Reaktionsgemisch wird danach über Leitung (9) in einen Abscheider (3) eingespeist. Dort wird die verdünnte Salzsäure als untere Phase über Leitung (19) abgetrennt. Die obere Phase wird über Leitung (11) in die erste Destillationseinheit (4) eingespeist. Die leichtflüchtigen Bestandteile werden über Leitung (12) in den Loop-Reaktor (1) zurückgeführt. Der Ablauf (13) wird in die zweite Destillationseinheit (14) eingespeist. Die leichtflüchtigen Bestandteile werden über Leitung (15) in den Umlagerungsreaktor (16) dosiert. Der umgelagerte Stoffstrom wird über Leitung (17) in die Destillationseinheit (4) zurückgeführt. Der Ablauf (18) enthält das OH-endständige Organohydrogenpolysiloxan (P).

Alle vorstehenden Symbole der vorstehenden Formeln weisen ihre Bedeutungen jeweils unabhängig voneinander auf. In allen Formeln ist das Siliciumatom vierwertig.

Im Rahmen der vorliegenden Erfindung sind, falls jeweils nicht anders angegeben, alle Mengen- und Prozentangaben auf das Gewicht bezogen, alle Temperaturen 20°C und alle Drücke 1,013 bar (abs.). Alle Viskositäten werden bei 25°C bestimmt.

### Beispiele

Die Bezugsziffern beziehen sich auf Figur 1

### Beispiel 1

In den Loop-Reaktor (1) werden 9 kg/h Methyldichlorsilan und 100 kg/h Dimethyldichlorsilan über Leitung (5), 60 l/h Destillate des Umlaufverdampfers (4) und des Dünnschichtverdampfers (14) über Leitung (12) und 15 kg/h Wasser bei 60°C eingespeist. Toluol wird in die Leitung (12) dosiert, so dass der Toluol-Gehalt im Reaktionsgemisch des Loop-Reaktors (1) bei ca. 20 % liegt. Der anfallende Chlorwasserstoff wird gasförmig aus dem Reaktor abgezogen. Das aus dem Loop-Reaktor (1) austretende Teilhydrolysat wird als homogene Phase über Leitung (7) in den Loop-Reaktor (2) geführt und dort mit 100 kg/h Wasser, welches auf 40°C vorgewärmt wird, vermischt.

Das aus dem Loop-Reaktor (2) austretende Reaktionsgemisch wird über Leitung (9) in den Abscheider (3) eingespeist. Dort wird in die obere, organische Hydrolysatphase und die untere wässrige Phase getrennt. Die organische Hydrolysatphase wird über zwei Destillationsstufen bei bis zu 160°C und 1 mbar (absolut) ausgeheizt. Die in den beiden Destillationsstufen (4) und(14) anfallenden Destillatströme werden über Leitung (12) vollständig in den Loop-Reaktor (1) eingespeist.

Der Ablauf (18) enthält lineares OH-terminiertes Hydrogenmethylpolysiloxan mit Dimethylsilyl-Gruppen (H-Gehalt 0,12%, Viskosität 169 mm²/sec, 0,4 ppm HCl-Gehalt, Flüchtigkeit bei 2 h/150 °C: 1,4%).
Die Viskosität nach 4-monatiger Lagerzeit bei Raumtemperatur betrug 175 mm²/sec, nach 11-monatiger Lagerzeit 186 mm²/sec. Der H-Gehalt blieb unverändert.

### Beispiel 2

In den Loop-Reaktor (1) werden 30 kg/h Methyldichlorsilan und 200 kg/h Dimethyldichlorsilan über Leitung (5), 100 l/h Destillat des Umlaufverdampfers (4) über Leitung (12) und 32 kg/h Wasser bei 50°C eingespeist. Toluol wird in die Leitung (12) dosiert, so dass der Toluol-Gehalt im Reaktionsgemisch des Loop-Reaktors (1) bei ca. 20 % liegt. Der anfallende Chlorwasserstoff wird gasförmig aus dem Reaktor abgezogen. Das aus dem Loop-Reaktor (1) austretende Teilhydrolysat wird als homogene Phase über Leitung (7) in den Loop-Reaktor (2) geführt und dort mit 200 kg/h Wasser vermischt, welches auf 60°C vorgewärmt wird.

Das aus dem Loop-Reaktor (2) austretende Reaktionsgemisch wird über Leitung (9) in den Abscheider (3) eingespeist. Dort wird in die obere, organische Hydrolysatphase und die untere wässrige Phase getrennt. Die organische Hydrolysatphase wird über zwei Destillationsstufen bei bis zu 160°C und 1 mbar (absolut) ausgeheizt. Der in der ersten Destillationsstufe (4) anfallende Destillatstrom wird in den Loop-Reaktor (1), der in der zweiten Destillationsstufe (14) anfallende Destillatstrom (15) wird vollständig in den Umlagerungreaktor (16), der mit einer Katalysatorschüttung eines sulfonierten Polystyrolharzes befüllt ist, eingespeist. Die Umlagerungsreaktion wird bei 20°C und einem Absolutdruck von 1100 hPa durchgeführt. Das aus dem Umlagerungsreaktor (16) austretende Produkt (17) wird wieder in den Destillationsteil der Anlage (4) zurückgespeist.

Der Ablauf (18) enthält lineares OH-terminiertes Hydrogenmethylpolysiloxan mit Dimethylsilyl-Gruppen (H-Gehalt 0,2%, Viskosität 682 mm²/sec).

## Patentansprüche

1. Verfahren zur Herstellung von OH-endständigen Organohydrogenpolysiloxanen (P), bei dem in einem ersten Schritt Organohydrogendichlorsilane (A) und Diorganodichlorsilane (B) mit höchstens 0,5 Mol Wasser je Mol hydrolysierbaren Chlors zu einem Teilhydrolysat (T) und gasförmigem Chlorwasserstoff umgesetzt werden und in einem zweiten Schritt das Teilhydrolysat (T) zur Entfernung der noch vorhandenen SiCl-Gruppen mit Wasser unter Bildung von Salzsäure behandelt wird, wobei ein die Organohydrogenpolysiloxane, (P) enthaltendes Hydrolysat (H) anfällt.

2. Verfahren nach Anspruch 1, bei dem die OH-endständigen Organohydrogenpolysiloxane (P) die allgemeine Formel 1
HO(SiR₂O)ₘ(SiR¹₂O)ₙH (1),
aufweisen, in der
**R¹** Wasserstoff oder einen gegebenenfalls mit Halogen- oder Cyanoresten substituierten Kohlenwasserstoffrest mit 1 bis 18 Kohlenstoffatomen,
**R** einen gegebenenfalls mit Halogen- oder Cyanoresten substituierten Kohlenwasserstoffrest mit 1 bis 18 Kohlenstoffatomen,
**m** ganzzahlige Werte von 1 bis 1000 und
**n** ganzzahlige Werte von 1 bis 1000 bedeuten, mit der Massgabe, dass mindestens ein Rest **R¹** Wasserstoff bedeutet.

3. Verfahren nach Anspruch 1 und 2, bei dem die im ersten Schritt eingesetzten Organohydrogendichlorsilane (A) die allgemeine Formel 2
R¹₂SiCl₂ (2),
aufweisen, in der **R¹** die in Anspruch 2 aufgeführten Bedeutungen aufweist.

4. Verfahren nach Anspruch 1 bis 3, bei dem die im ersten Schritt eingesetzten Diorganodichlorsilane (B) die allgemeine Formel 3
R₂SiCl₂ (3),
aufweisen, in der **R** die in Anspruch 2 aufgeführten Bedeutungen aufweist.

5. Verfahren nach Anspruch 1 bis 4, bei dem der erste Schritt, der zweite Schritt oder beide Schritte in Anwesenheit eines in Wasser unlöslichen organischen Lösungsmittels mit einer Dichte von höchstens 0,9 kg/l (L) durchgeführt werden.

6. Verfahren nach Anspruch 1 bis 5, bei dem beide Schritte vollkontinuierlich durchgeführt werden.

7. Verfahren nach Anspruch 1 bis 6, bei dem das nach dem zweiten Schritt anfallende Hydrolysat (H) in Organohydrogenpolysiloxane (P) und leichtflüchtiges Organopolysiloxane enthaltendes Gemisch (G) aufgetrennt wird und das Gemisch (G) in den ersten Schritt und/oder zweiten Schritt zurückgeführt oder ganz oder teilweise zu schwerer flüchtigen, im wesentlichen linearen Organopolysiloxanen umgelagert wird.

8. Verfahren nach Anspruch 7, bei dem die Abtrennung des Gemisches (G) durch Destillation erfolgt, wobei diese in zwei Stufen durchgeführt wird, in welchen die Gemische (G1) und (G2) erhalten werden.

9. Verfahren nach Anspruch 8, bei dem das Gemisch (G1) direkt in den ersten Hydrolyseschritt zurückgeführt und das Gemisch (G2) in Anwesenheit von Umlagerungskatalysator umgelagert und anschließend vor die erste Destillationsstufe zurückgeführt wird.

## Claims

1. Process for preparing OH-terminal organohydropolysiloxanes (P), in which, in a first step, organohydrodichlorosilanes (A) and diorganodichlorosilanes (B) are reacted with at most 0.5 mol of water per mol of hydrolyzable chlorine to give a partial hydrolyzate (T) and gaseous hydrogen chloride, and, in a second step, the partial hydrolyzate (T), to remove the SiCl groups still present, is treated with water to form hydrochloric acid, while obtaining a hydrolyzate (H) comprising the organohydropolysiloxanes (P).

2. Process according to claim 1, in which the OH-terminal organohydropolysiloxanes (P) have the general formula 1
HO (SiR₂O)ₘ (SiR¹₂O) ₙH (1)
in which
**R¹** is hydrogen or a hydrocarbon radical which is optionally substituted by halogen or cyano radicals and has from 1 to 18 carbon atoms,
**R** is a hydrocarbon radical which is optionally substituted by halogen or cyano radicals and has from 1 to 18 carbon atoms,
**m** is integers from 1 to 1000 and
**n** is integers from 1 to 1000,
with the proviso that at least one R¹ radical is hydrogen.

3. Process according to claim 1 and 2, in which the organohydrodichlorosilanes (A) used in the first step have the general formula 2
R¹₂SiCl₂ (2)
in which **R¹** is as defined in claim 2.

4. Process according to claim 1 to 3, in which the diorganodichlorosilanes (B) used in the first step have the general formula 3
R₂SiCl₂ (3)
in which **R** is as defined in claim 2.

5. Process according to claim 1 to 4, in which the first step, the second step or both steps is/are carried out in the presence of a water-insoluble organic solvent having a density of at most 0.9 kg/l (L).

6. Process according to claim 1 to 5, in which the two steps are carried out fully continuously.

7. Process according to claim 1 to 6, in which the hydrolyzate (H) obtained after the second step is separated into organohydropolysiloxanes (P) and a mixture (G) comprising volatile organopolysiloxanes, and the mixture (G) is recycled into the first step and/or second step or entirely or partly rearranged to less volatile, substantially linear organopolysiloxanes.

8. Process according to claim 7, in which the mixture (G) is removed by distillation, which is carried out in two stages in which the mixtures (G1) and (G2) are obtained.

9. Process according to claim 8, in which the mixture (G1) is recycled directly into the first hydrolysis step, and the mixture (G2) is rearranged in the presence of rearrangement catalyst and then recycled upstream of the first distillation stage.

## Revendications

1. Procédé pour la préparation d'organohydrogénopolysiloxanes (P) à terminaison OH, dans lequel, dans une première étape, on fait réagir des organohydrogénodichlorosilanes (A) et des diorganodichlorosilanes (B) avec au maximum 0,5 mole d'eau par mole de chlore hydrolysable, pour aboutir à un hydrolysat partiel (T) et du chlorure d'hydrogène gazeux et, dans une deuxième étape, on traite par de l'eau l'hydrolysat partiel (T) pour l'élimination des groupes SiCl encore présents, avec formation d'acide chlorhydrique, de sorte qu'il se forme un hydrolysat (H) contenant les organohydrogénopolysiloxanes (P).

2. Procédé selon la revendication 1, dans lequel les organohydrogénopolysiloxanes (P) à terminaison OH, présentent la formule générale 1
HO(SiR₂O)ₘ(SiR¹₂O) ₙH (1),
dans laquelle
R¹ représente un atome d'hydrogène ou un radical hydrocarboné ayant de 1 à 18 atomes de carbone, éventuellement substitué par des radicaux halogéno ou cyano,
**R** représente un radical hydrocarboné ayant de 1 à 18 atomes de carbone, éventuellement substitué par des radicaux halogéno ou cyano,
**m** représente des valeurs numériques entières de 1 à 1 000 et
**n** représente des valeurs numériques entières de 1 à 1 000,
étant entendu qu'au moins un radical **R¹** représente un atome d'hydrogène.

3. Procédé selon les revendications 1 et 2, dans lequel les organohydrogénodichlorosilanes (A) utilisés dans la première étape présentent la formule générale 2
R¹₂SiCl₂ (2),
dans laquelle **R¹** a les significations indiquées dans la revendication 2.

4. Procédé selon les revendications 1 à 3, dans lequel les diorganodichlorosilanes (B) utilisés dans la première étape présentent la formule générale 2
R₂SiCl₂ (3),
dans laquelle **R** a les significations indiquées dans la revendication 2.

5. Procédé selon les revendications 1 à 4, dans lequel on effectue la première étape, la deuxième étape ou la troisième étape en présence d'un solvant organique insoluble dans l'eau, ayant une densité d'au maximum 0,9 kg/l (L).

6. Procédé selon les revendications 1 à 5, dans lequel les deux étapes sont effectuées entièrement en continu.

7. Procédé selon les revendications 1 à 6, dans lequel l'hydrolysat (H) produit après la deuxième étape est fractionné en organohydrogénopolysiloxanes (P) et mélange (G) très volatil, contenant des organopolysiloxanes et le mélange (G) est recyclé dans la première étape et/ou la deuxième étape ou transposé en partie ou en totalité en organopolysiloxanes essentiellement linéaires, peu volatils.

8. Procédé selon la revendication 7, dans lequel le fractionnement du mélange (G) s'effectue par distillation, celle-ci étant effectuée en deux stades dans lesquels sont obtenus les mélanges (G1) et (G2).

9. Procédé selon la revendication 8, dans lequel le mélange (G1) est recyclé directement dans la première étape d'hydrolyse et le mélange (G2) est transposé en présence d'un catalyseur de transposition et ensuite recyclé dans le premier stade de distillation.
